# EUROPEAN PATENT APPLICATION

(11) **EP 3 466 846 A1**
(43) Date of publication of application: **10.04.2019**
(21) Application number: 17810192.9
(22) Date of filing: 01.06.2017
(51) Int. Cl.: B65G 47/91, B25J 13/00, B65B 35/16, B65B 35/18

(54) **FOODSTUFF PACKING DEVICE**

(30) Priority: 06.06.2016 JP 2016112776
(71) Applicant: Kawasaki Jukogyo Kabushiki Kaisha, Kobe-shi, Hyogo 650-8670 (JP)
(72) Inventor: HASHIMOTO, Yasuhiko, Hyogo 650-8670 (JP); HASEGAWA, Shogo, Hyogo 650-8670 (JP); BANDO, Kenji, Hyogo 650-8670 (JP); TANAKA, Keiichi, Hyogo 650-8670 (JP); KATAFUCHI, Hiroshi, Hyogo 650-8670 (JP); HIRATA, Kazunori, Hyogo 650-8670 (JP)
(74) Representative: Witte, Weller & Partner Patentanwälte mbB
(86) International application number: PCT/JP2017/020425
(87) International publication number: WO 2017/213014

(57) **Abstract**

A packing device (10) of food (40) includes a feeding part (20) configured to supply the food, a gripping part configured to grip a plurality of foods at both sides of a plurality of foods in a direction in which the plurality of foods are placed in order by the feeding part, and a conveying part configured to convey onto a tray the plurality of foods gripped by the gripping part.

## Description

### TECHNICAL FIELD

The present disclosure relates to a food packing device which packs food into a tray.

### BACKGROUND ART

Conventionally, food container packing devices disclosed in Patent Document 1 have been known as devices which pack food into a tray, for example. In the food container packing devices, the food falls from a conveyance conveyor to a stationary chute plate. While falling on the stationary chute plate, the food sequentially changes its direction by timing holders and holding containers. Then, the food which became in a given posture falls onto a conveying part from the stationary chute plate so that the foods are stackedly packed into the container conveyed by the conveying part.

### [Reference Document of Conventional Art]

### [Patent Document]

[Patent Document 1] JP1994-024408A

### DESCRIPTION OF THE DISCLOSURE

### [Problems to be Solved by the Disclosure]

In the food container packing device of Patent Document 1, the food is dropped sequentially onto the timing holder, the holding container, and the container. It is possible to pack the food, such as rice balls and sandwiches, into the container by the food container packing device. Such food is easy to deform, and once it deforms due to an external force, it will not resume its original shape even after the external force is removed. Therefore, if the food is deformed by the external force when the food falls, its commodity value will be spoiled by the deformation of food. As a result, a rate of nonconforming foods may increase to reduce the work efficiency.

The present disclosure is made in view of solving the above problems, and one purpose thereof is to provide a food packing device which can control a reduction in the work efficiency.

### [Summary of the Disclosure]

In order to achieve the purpose described above, a food packing device according to one aspect of the present disclosure includes a feeding part configured to supply food, a gripping part configured to grip a plurality of foods at both sides of a plurality of foods in a direction in which the plurality of foods are placed in order by the feeding part, and a conveying part configured to convey onto a tray the plurality of foods gripped by the gripping part.

Thus, even if the food is easy to deform, the food can be packed into the tray without being deformed, by the food being gripped by the gripping part. Therefore, it is prevented that nonconforming food increases and work efficiency is reduced.

The gripping part may have a pair of support members, and an adjustment member configured to adjust a mutual spacing of the pair of support members. The pair of support members may grip the plurality of foods by reducing the mutual spacing. Thus, even if the food is easy to deform, the food can be packed into the tray without being deformed, by the food being pinched by the pair of support members.

The gripping part may have support members and suction openings formed in contact surfaces configured to contact the food in the support members. The support members may grip the plurality of foods by sucking the foods to the contact surfaces through the suction openings. Thus, even if the food is easy to deform, the food can be packed into the tray without being deformed, by the food being sucked (adhere by suction) by the suction opening.

The food packing device may further include an attaching part to which a plurality of gripping parts are replaceably attached. Thus, the work efficiency is improved by conveying the food with an attached gripping part while the food being supplied to other gripping part which is not attached.

The gripping part may further have a placement member extending in a direction perpendicular to the direction in which the plurality of foods are placed in order, the foods placed on the placement member. Thus, by supporting the food with the placement member in addition to the support member, the foods can be gripped more securely.

The feeding part may have one or more suction heads configured to suck the food. Thus, even if the food is easy to deform, the food can be supplied to the gripping part without being deformed, by the food being sucked by the suction heads.

The feeding part may further have a rotary body, connected to a plurality of suction heads, and configured to rotate centering on an axis parallel to the direction in which the plurality of foods are placed in order. Thus, a number of reciprocating movements between a conveyor belt and the gripping part is reduced so that the work efficiency is improved.

In the food packing device, an outer surface of the food may have a pair of parallel surfaces, and the gripping part grips the plurality of foods placed in order in a state where the parallel surfaces contact each other. Thus, a storage rate of the foods in the tray is increased, and the work efficiency is improved.

The food packing device may be comprised of a robot including a first arm having the feeding part at a tip end thereof, and a second arm having the gripping part at a tip end thereof. Thus, the packing work of the food is possible, for example, only by using a general-purpose robot of which the tip end is replaceable and by replacing the tip end.

### [Effect of the Disclosure]

The present disclosure has the structure described above and has the effect to control the reduction in the work efficiency.

### BRIEF DESCRIPTION OF DRAWINGS

Fig. 1 is a plan view schematically illustrating an overall structure of one example of a robot to which a food packing device according to Embodiment 1 is applied.
Fig. 2 is a functional block diagram schematically illustrating a structure of a control device of the robot of Fig. 1.
Fig. 3 is a perspective view schematically illustrating a state where a feeding part supplies food to a gripping part.
Fig. 4 is a perspective view schematically illustrating a state where the gripping part grips the food.
Fig. 5 is a perspective view schematically illustrating a state where the conveying part conveys food onto a tray.
Fig. 6 is a perspective view schematically illustrating a part of a robot to which a food packing device according to Embodiment 2 is applied.
Fig. 7 is a perspective view schematically illustrating a part of a robot to which a food packing device according to Embodiment 3 is applied.

### MODES FOR CARRYING OUT THE DISCLOSURE

Hereinafter, preferable embodiments will be described with reference to the drawings. Note that, in the following, the same or corresponding elements are denoted by the same referential characters throughout the drawings to omit redundant description. Moreover, the drawings illustrate each element schematically for easier understandings. Further, directions in which a pair of arms are extended are referred to as left-and-right directions, directions parallel to an axial center of a base shaft are referred to as vertical directions, and directions perpendicular to the left-and-right directions and the vertical directions are referred to as front-and-rear directions.

### (Embodiment 1)

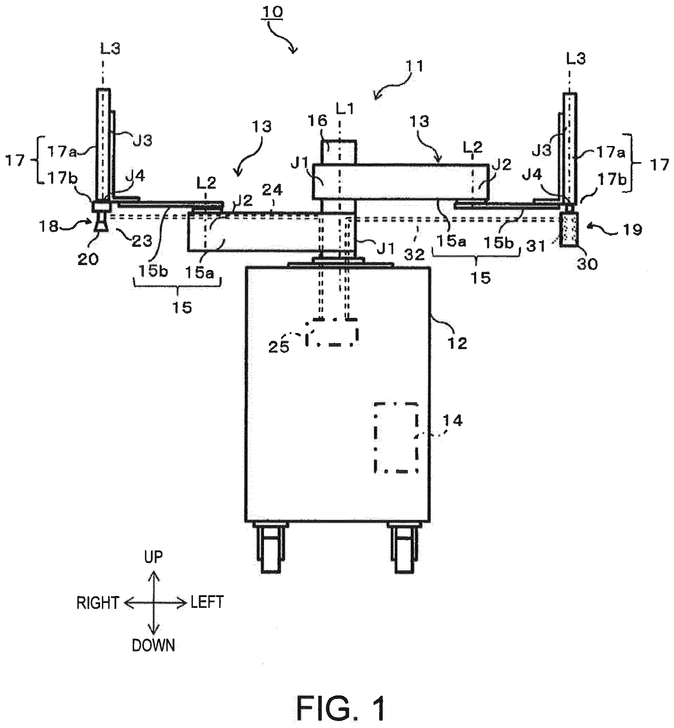

A packing device 10 of food 40 according to Embodiment 1 is a device which packs a plurality of foods 40 into a tray 41. A case where the packing device 10 of the food 40 according to the present disclosure is comprised of a robot 11 illustrated in Fig. 1 is described. Note that the packing device 10 of the food 40 is not limited to the case where it is comprised of the robot 11. Note that, although a horizontal articulated dual-arm robot is described as the robot 11, a horizontal articulated or a vertical articulated robot may be employed. Moreover, the food 40 is a food product having a constant shape, and it may be a rice ball or a sandwich, for example.

As illustrated in Fig. 1, the robot 11 includes a carriage 12, a pair of robot arms (hereinafter, may simply be referred to as "arms") 13 supported by the carriage 12, and a control device 14 accommodated inside the carriage 12. Each arm 13 is a horizontal articulated robot arm, and is provided with an arm part 15, a wrist part 17, and a hand part 18 or 19. The arm part 15 and the wrist part 17 function as a conveying part which conveys the plurality of foods 40 onto the tray 41. Note that the left arm 13 and the right arm 13 may have substantially the same structure except for the hand parts 18 and 19. Moreover, the left arm 13 and the right arm 13 may operate independently or operate in association with each other.

In this example, the arm part 15 is comprised of a first link 15a and a second link 15b. The first link 15a is coupled to a base shaft 16 fixed to an upper surface of the carriage 12 through a rotary joint J1, and is rotatable on a rotation axis L1 passing through an axial center of the base shaft 16. The second link 15b is coupled to a tip end of the first link 15a through a rotary joint J2, and is rotatable on a rotation axis L2 defined at a tip end of the first link 15a.

The wrist part 17 is comprised of an elevating part 17a and a rotating part 17b. The elevating part 17a is coupled to a tip end of the second link 15b through a linear-motion joint J3, and is ascendable and descendible with respect to the second link 15b. The rotating part 17b is coupled to a lower end of the elevating part 17a through a rotary joint J4, and is rotatable on a rotation axis L3 defined at the lower end of the elevating part 17a.

The right hand part 18 and the left hand part 19 are each coupled to the rotating part 17b of the wrist part 17. The right hand part 18 is comprised of a feeding part 20 which supplies the food 40, and the left hand part 19 is comprised of a gripping part 30 which grips the food 40. The feeding part 20 is provided to a tip end of the right arm (first arm) 13, and the gripping part 30 is provided to a tip end of the left arm (second arm) 13. The feeding part 20 has a suction head 23 which sucks the food 40 (cause the food 40 to adhere thereto by suction), and the gripping part 30 has suction openings 31 which suck the food 40. Note that details of the right hand part 18 and the left hand part 19 will be described later.

The suction head 23 is connected with a vacuum generating device 25 via a first piping 24, and the suction openings 31 are connected with the vacuum generating device 25 via a second piping 32. The vacuum generating device 25 is a device which generates a negative pressure at the suction head 23 and the suction openings 31, such as a vacuum pump, CONVUM®, is provided to the carriage 12 or the arm 13. For example, an on-off valve (not illustrated) is provided to each of the first piping 24 and the second piping 32. The suction and stop of the suction by the suction head 23 and the suction openings 31 are performed by opening and closing the first piping 24 and the second piping 32 by the on-off valves, respectively. Operation of the vacuum generating device 25 and opening and closing of the on-off valves are controlled by the control device 14. Thus, the vacuum generating device 25 can suck via the suction head 23 and the suction openings 31, and suck the food 40. Note that, although the single vacuum generating device 25 is connected to both the suction head 23 and the suction openings 31, a vacuum generating device 25 connected to the suction head 23 and a vacuum generating device connected to the suction openings 31 may separately be provided.

Each of the arms 13 having the structure described above has joints J1-J4. The arm 13 is provided with driving servo motors (not illustrated) and encoders (not illustrated) which detect rotational angles of the servo motors corresponding to the joints J1-J4, respectively. Moreover, the rotation axes L1 of the first links 15a of the two arms 13 are located on the same straight line, and the first link 15a of one arm 13 and the first link 15a of the other arm 13 are disposed with a height difference therebetween.

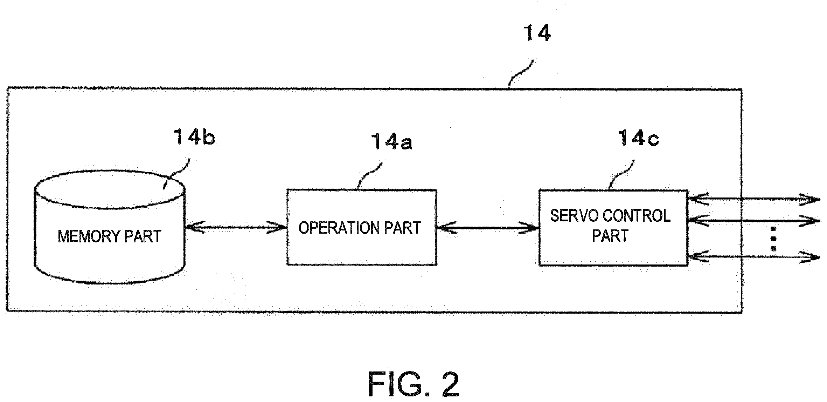

As illustrated in Fig. 2, the control device 14 includes an operation part 14a, such as a CPU, a memory part 14b, such as a ROM and a RAM, and a servo control part 14c. The control device 14 is a robot controller provided with a computer, such as a microcontroller, for example. Note that the control device 14 may be comprised of a sole control device 14 which carries out an integrated control, or may be comprised of a plurality of control devices 14 which collaborate mutually and carry out a distributed control.

The memory part 14b stores information, such as a basic program as a robot controller, various fixed data, etc. The operation part 14a controls various operations of the robot 11 by reading and performing software, such as a basic program stored by the memory part 14b. That is, the operation part 14a generates a control instruction for the robot 11, and outputs it to the servo control part 14c. The servo control part 14c is configured to control driving of the servo motors corresponding to the joints J1-J4 of each arm 13 of the robot 11 based on the control instructions generated by the operation part 14a.

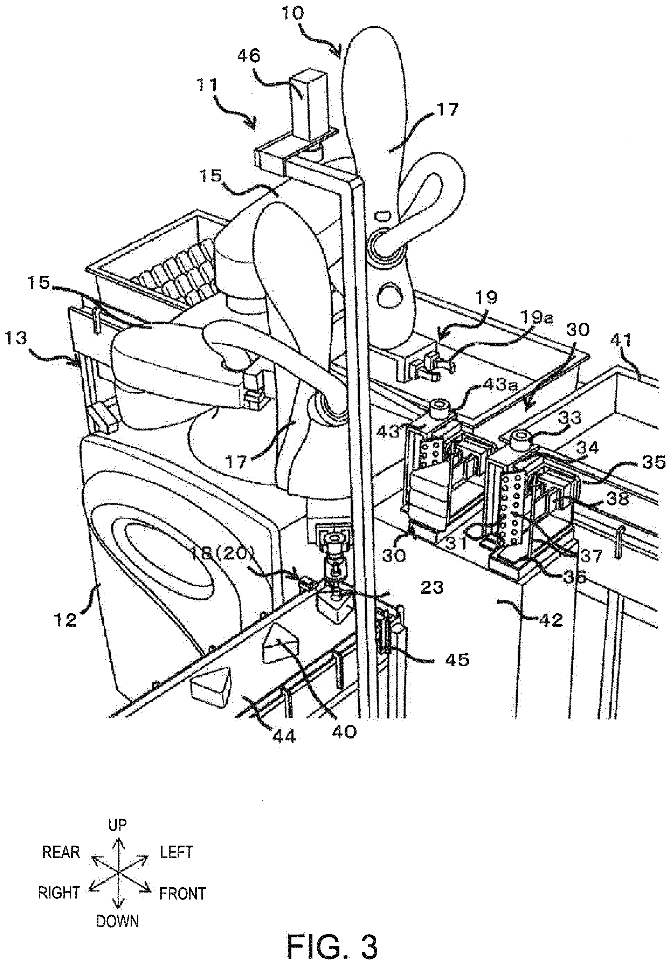

Next, the right hand part 18 and the left hand part 19 are described with reference to Figs. 3 to 5. Note that, in Figs. 3 to 5, the first piping 24 and the second piping 32 are omitted for easier understandings. Moreover, although the right hand part 18 is comprised of the feeding part 20 and the left hand part 19 is comprised of the gripping part 30, the right hand part 18 may be comprised of the gripping part 30 and the left hand part 19 may be comprised of the feeding part 20.

The left hand part 19 is comprised of, in addition to the gripping part 30, an attaching part 19a which attaches the gripping part 30 to the wrist part 17. A plurality of gripping parts 30 may be replaceably attached to the attaching part 19a. The attaching part 19a is comprised of, for example, a pair of plate members, and is adjustable of spacing therebetween. Thus, the attaching part 19a pinches a part to be attached, by the pair of plate members so that a plurality of gripping parts 30 are replaceably attached to the attaching part 19a. Note that an attaching part which attaches the feeding part 20 to the wrist part 17 may also be provided to the right hand part 18. Moreover, the attaching part 19a of the left hand part 19 and the attaching part of the right hand part 18 may be attachable to the feeding part 20 and the gripping part 30, respectively. Thus, the feeding part 20 and the gripping part 30 can be replaceably attached to the left hand part 19 and the right hand part 18.

The feeding part 20 has one or more suction heads 23 (in this embodiment, one), and supplies the food 40 to the gripping part 30. A tip-end part of the suction head 23 is a suction pad made of elastic material, such as rubber, and has a cap shape which opens downwardly. The suction head 23 is connected to the rotating part 17b of the wrist part 17 so that its opening is oriented downwardly, and rotates on a vertically-extending axis in connection with the rotation of the rotating part 17b.

The gripping part 30 grips the plurality of foods 40 which are placed in order by the feeding part 20, and moves between a workbench 42 and the tray 41. When the gripping part 30 is located above the workbench 42, the gripping part 30 is held by a holder 43 fixed onto the workbench 42.

The holder 43 is provided with a lower part, side parts, and an upper part, for example. The lower part of the holder 43 is fixed and the side parts support the upper part to the lower part. The upper part has a flat-plate shape, and extends in parallel to an upper surface of the workbench 42, where a notch 43a is formed. The notch 43a is formed in the upper part, on the side where the tray 41 is disposed.

The gripping part 30 has a handle member 33, a pedestal member 34, a rotary member 35, a placement member 36, a pair of support members 37, and an adjustment member 38. The handle member 33 is the to-be-attached part by the attaching part 19a, and for example, it has a cylindrical shape and is provided to an upper surface of the pedestal member 34. When the gripping part 30 is located at the workbench 42, the handle member 33 is fitted in the notch 43a of the holder 43.

The pedestal member 34 is a base for the rotary member 35, and for example, it has an L-shape having an upper part and side parts. The handle member 33 is attached to the upper part of the pedestal member 34. The side parts have plate shapes extending from the upper part to the lower part.

The rotary member 35 is a part which rotates with respect to the pedestal member 34 to change the orientation of the food 40, and is rotatably attached to the side part of the pedestal member 34. The rotary member 35 is connected with an actuator etc. and, thus, the rotary member 35 is rotated. Operation of the rotary member 35 is controlled by the control device 14.

The placement member 36 is a part which supports the food 40 from below when the food 40 supported by the support member 37 is carried in. The placement member 36 has, for example, an L-shape, and has a side part and a lower part. The side part is connected to the rotary member 35 and changes an orientation of the lower part in association with the rotation of the rotary member 35. The lower part has a plate shape, and is provided horizontally when the food 40 is placed thereon and conveyed.

The support member 37 extends in a direction in which the plurality of foods 40 are placed in order, at both sides of the plurality of foods 40. That is, the support member 37 has a dimension extending over a range between a food 40 at one end of the plurality of foods 40 placed in order and a food 40 at the other end. The support member 37 has, for example, two flat main surfaces, each having a rectangular flat-plate shape and opposing to the other, and one of the main surfaces is a contact surface which contacts the food 40 supported by the support member 37.

The pair of support members 37 are connected with the rotary member 35 via the adjustment member 38. For example, the pair of support members 37 are arranged in a chevron shape with the vertex is omitted or divided so that the mutual spacing becomes narrower toward the connection therebetween. The adjustment member 38 is connected to an actuator (not illustrated) etc., and is connected to one or both of the pair of support members 37 so that the adjustment member 38 moves linearly to change the mutual spacing of the pair of support members 37. By this adjustment member 38, the pair of support members 37 reduces the mutual spacing to pinch and grip the plurality of foods 40.

A plurality of suction openings 31 are formed in the contact surface of the support member 37, which contact the foods 40. The plurality of suction openings 31 are arranged in a plurality of rows (here, two rows) in directions perpendicular to directions in which the plurality of foods 40 are placed in order. Moreover, the plurality of suction openings 31 are arranged in a plurality of rows (here, eight rows) in the directions in which the plurality of foods 40 are placed in order. Thus, the plurality of suction openings 31 are assigned to one food 40.

Next, a method of packing the food 40 into the tray 41 by the robot 11 having the above structure is described with reference to Figs. 3 to 5. This method is controlled by the control device 14. Note that, here, a triangular rice ball packed with a film is used as the food 40, and the method of packing the rice ball is described. Note that, since the method of packing will be the same for other foods 40, the description thereof is omitted. Moreover, an outer surface of the food 40 has three rectangular surfaces and two triangular surfaces. The two triangular surfaces are provided in parallel to each other.

As illustrated in Fig. 3, the workbench 42 and a conveyor belt 44 are disposed in front of the robot 11, and the tray 41 is disposed at the side of the robot 11 (in this embodiment, left side). The workbench 42 is a table where the food 40 is placed temporarily, and is disposed on the right side of the conveyor belt 44. The conveyor belt 44 is a device to transfer the food 40 to a place in front of the robot 11, and extends in the left-and-right directions. In this embodiment, since the area of the triangular surface of the food 40 is larger than that of the rectangular surface, the food 40 is carried in the left-and-right direction on the conveyor belt 44, while the triangular surfaces being oriented in the vertical directions. The gripping part 30 on the workbench 42 is placed so that the connection part of the pair of support members 37 is disposed on the tray 41 side and the opened part is disposed on the conveyor belt 44 side. Note that the opened part of the support member 37 is opposite from the connection part of the support members 37, and is a part with the largest mutual spacing. The tray 41 is, for example, a container to hold the foods 40 for shipping, and opens upwardly.

Moreover, a sensor 45 is disposed near the workbench 42 and on the side of the conveyor belt 44. The sensor 45 detects the food 40 being conveyed on the conveyor belt 44, and outputs a detection signal to the control device 14. Further, a camera 46 is disposed near the workbench 42 and above the conveyor belt 44. The camera 46 images the food 40 being conveyed on the conveyor belt 44, and outputs the captured image to the control device 14. The control device 14 analyzes the image to determine the orientation of the food 40.

First, when the food 40 is carried near the robot 11 by the conveyor belt 44, the sensor 45 detects the food 40. The control device 14 acquires the image of the food 40 from the camera 46 in response to the detection signal from the sensor 45, and causes the suction head 23 of the right hand parts 18 and 19 to suck the triangular surface of the food 40. The control device 14 then determines the orientation of the food 40 based on the image from the camera 46, and adjusts by the wrist part 17 the orientation of the food 40 based on the determination result. Here, the orientation of the food 40 is adjusted based on the gripping part 30. For example, the orientation of the food 40 is changed so that a vertex of the food 40 is on the connection part side of the pair of support members 37 while the rectangular surface which is opposite from the vertex is on the opened part side of the pair of support members 37.

The food 40 is conveyed from the conveyor belt 44 to the gripping part 30 by the wrist part 17 and the arm part 15, and is placed on the placement member 36 of the gripping part 30. Here, the food 40 is placed on the placement member 36 between the pair of support members 37 so that two of the rectangular surfaces of the food 40 conform to the contact surfaces of the pair of support members 37, respectively. The series of works from the suction to the placement of the food 40 is repeated to place the plurality of foods 40 on the placement member 36. Thus, the food 40 is supplied to the gripping part 30, and the plurality of foods 40 are placed in order so that the triangular surfaces of the foods 40 contact each other between the pair of support members 37.

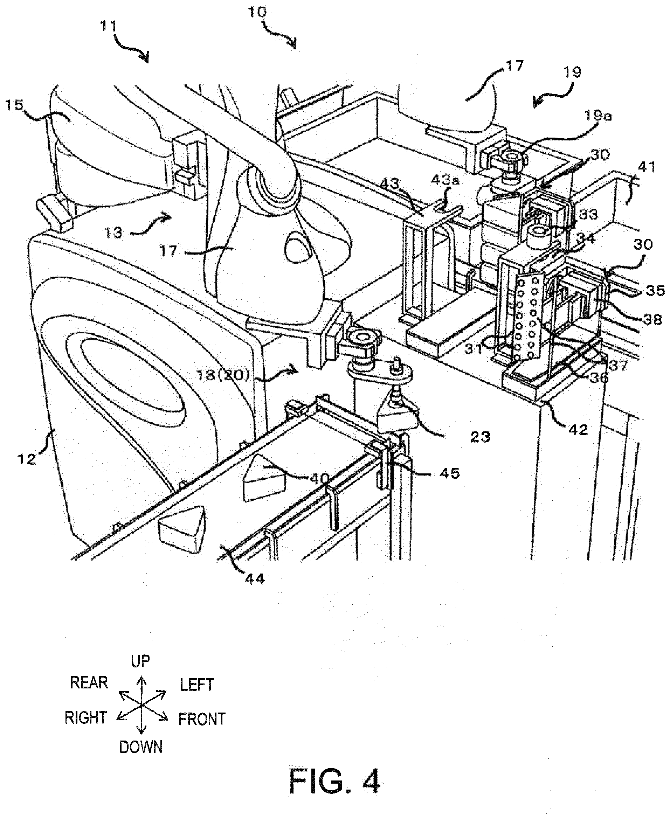

As illustrated in Fig. 4, the series of supply work is repeated to place a given number of (in this embodiment, four) foods 40 in order. Then, the attaching part 19a of the left hand part 19 pinches the handle member 33 to attach the gripping part 30 to the wrist part 17.

The spacing of the pair of support members 37 is narrowed by the adjustment member 38 to pinch the plurality of foods 40 by the pair of support members 37. Here, since the support members 37 extend at both sides of the plurality of foods 40 in the direction in which the plurality of foods 40 are placed in order, all the foods 40 are pinched by the pair of support members 37. Moreover, the food 40 is sucked by the suction opening 31 to cause the food 40 which is in contact with the contact surface to adhere to the contact surface. Here, since the plurality of suction openings 31 are disposed so as to be assigned to the respective foods 40, all the foods 40 are sucked by the suction openings 31. Thus, the plurality of foods 40 are gripped more securely.

The gripping part 30 is moved rearwardly by the arm part 15. Thus, the handle member 33 is removed from the notch 43a, and the gripping part 30 separates from the holder 43. The gripping part 30 is then conveyed by the arm part 15 and the wrist part 17 from the workbench 42 onto the tray 41. Here, the posture of the gripping part 30 is maintained so that the placement member 36 becomes horizontal. Thus, the plurality of foods 40 are supported by, in addition to the pair of support members 37, the placement member 36, and consequently the plurality of foods 40 are conveyed more securely.

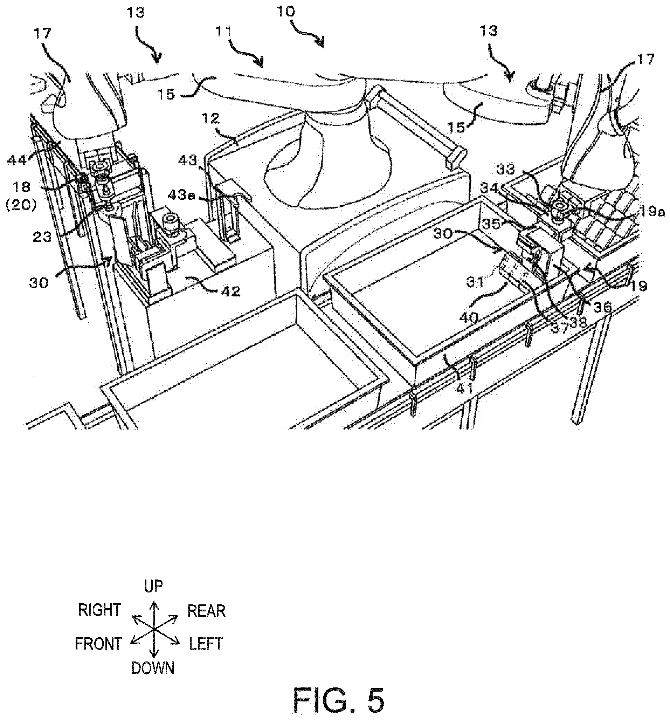

As illustrated in Fig. 5, the rotary member 35 is rotated on the tray 41. Thus, the support member 37 of which the longitudinal directions extends in the vertical directions rotates to change its orientation to horizontal directions (in this embodiment, the left-and-right directions). The rectangular surfaces of the foods 40 located on the opened part side of the pair of support members 37 face downwardly. Then, the gripping part 30 is descended by the wrist part 17 to put the foods 40 into the tray 41.

The suction of the suction opening 31 is canceled, and the pair of support members 37 are expanded by the adjustment member 38. Thus, the foods 40 separate from the gripping part 30, and are accommodated in the tray 41. Then, the support member 37 is rotated by the rotary member 35 to be oriented vertically, and the gripping part 30 is returned from the tray 41 to the holder 43 on the workbench 42 by the wrist part 17 and the arm part 15.

Moreover, if a plurality of (e.g., two) gripping parts 30 are used, two holders 43 may be disposed in the workbench 42, and the gripping parts 30 may be installed in the respective holders 43. Then, while a given number of foods 40 are supplied to one of the gripping parts 30 and this gripping part 30 is being conveyed from the workbench 42 to the tray 41, next foods 40 are supplied to the other gripping part 30. Then, after the food 40 is accommodated in the tray 41 by the one gripping part 30, when this gripping part 30 is returned to the holder 43 on the workbench 42, the gripping part 30 is separated from the attaching part 19a and the other attaching part 19a is attached. Thus, since the series of work from the supply of the foods 40 to the gripping part 30 to the packing of the foods 40 into the tray 41 is performed alternately by the two gripping parts 30, the work time is shortened.

According to the above structure, the gripping part 30 grips the plurality of foods 40 at both sides of the plurality of foods 40 in the direction in which the plurality of foods 40 are placed in order by the feeding part 20. For example, the pair of support members 37 reduce the mutual spacing to pinch and grip the plurality of foods 40. Moreover, the support members 37 grip the plurality of foods 40 by sucking the foods 40 to the contact surfaces through the suction openings 31. Thus, even if the food 40 is a rice ball or sandwich which is easy to deform, the food 40 can be packed into the tray 41 without being deformed, by the food 40 being gripped and conveyed by the support members 37. Therefore, it is prevented that the nonconforming food increases and the work efficiency is reduced.

The plurality of gripping parts 30 are replaceably attached to the attaching part 19a. Thus, the plurality of gripping parts 30 can be replacingly used to shorten the work hours.

The gripping part 30 further has the placement member 36 which extends in the direction perpendicular to the direction in which the plurality of foods 40 are placed in order, and on which the foods 40 are placed. Thus, the plurality of foods 40 can be gripped and conveyed more securely.

The feeding part 20 has the suction head 23 which sucks the food 40. The suction head 23 sucks the food 40 and supplies it to the gripping part 30. Thus, even if the food 40 is easy to deform, the food 40 can be supplied without being deformed.

Moreover, the outer surface of the food 40 has the pair of parallel triangular surfaces, and the plurality of foods 40 are placed in order so that the triangular surfaces contact each other, and are raised by the pair of support members 37. Thus, the foods 40 are stably gripped, a storage rate of the foods 40 in the tray 41 is increased, and the work efficiency is improved.

Note that, although in this embodiment the gripping part 30 has the adjustment member 38, the gripping part 30 may not have the adjustment member 38. In this case, the mutual spacing of the pair of support members 37 is kept constant, and the foods 40 are not pinched by the pair of support members 37. Note that, since the plurality of suction openings 31 are formed in the contact surfaces of the support members 37, the foods 40 are gripped by the suction of the suction openings 31.

Moreover, although the suction openings 31 are formed in the support members 37, the suction openings 31 may not be formed in the support members 37. In this case, the foods 40 are not sucked by the suction openings 31. However, the pair of support members 37 is reduced in the mutual spacing by the adjustment member 38 to pinch and grip the foods 40.

Further, although the gripping part 30 has the placement member 36, the gripping part 30 may not have the placement member 36. In this case, when supplying the food 40 to the gripping part 30, the pair of support members 37 may be disposed on the workbench 42, and the foods 40 may be placed on the workbench 42 between the pair of support members 37.

Further, the packing device 10 is comprised of the robot 11 including the first arm 13 having the feeding part 20 at the tip end, and the second arm 13 having the gripping part 30 at the tip end. For example, the feeding part 20 may be removably attached to the wrist part 17 via the attaching part (not illustrated). The feeding part 20 is attached to the wrist part 17 via the attaching part, and is provided to the tip end of the arm 13. According to this structure, the packing work of the food is possible, for example, only by using the general-purpose robot 11 of which the tip end is replaceable and by replacing the tip end.

### (Embodiment 2)

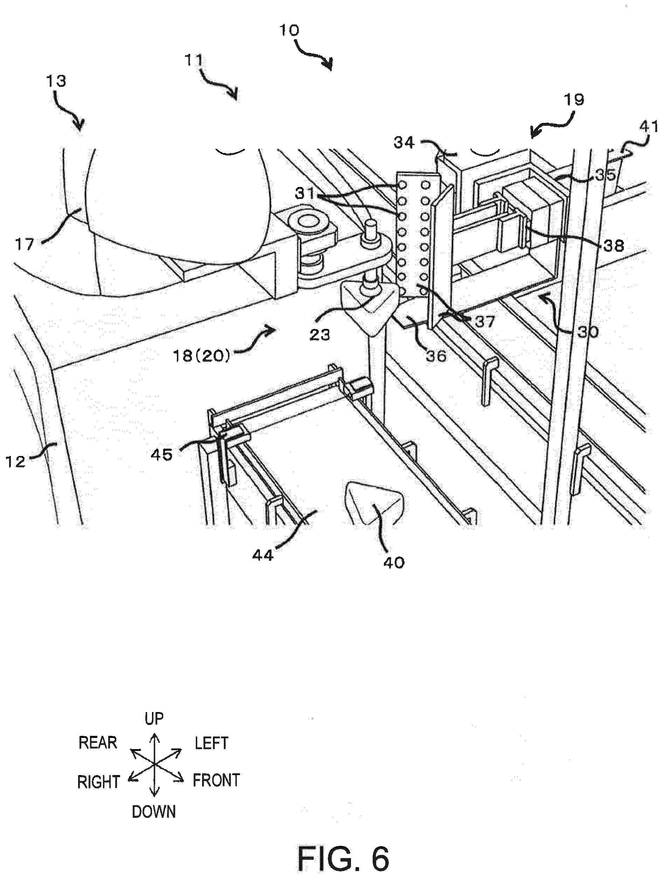

The packing device 10 of the food 40 according to Embodiment 1 is provided with the plurality of gripping parts 30. However, the number of gripping parts 30 is not limited to this number, but may be one. A packing device 10 of the food 40 according to Embodiment 2 is provided with one gripping part 30 as illustrated in Fig. 6.

The gripping part 30 grips the plurality of foods 40 placed in order by the feeding part 20, and moves between a location near the conveyor belt 44 and the tray 41. The gripping part 30 is attached to the wrist part 17 through the attaching part 19a. In this case, since it is not necessary to replace the gripping part 30, the left hand part 19 may not be provided with the attaching part 19a.

Moreover, the gripping part 30 may descend by the height of the food 40 each time the food 40 is placed on the placement member 36. Thus, the height of the food 40 sucked to the suction head 23 coincides with the height of the place where the food 40 is placed in the gripping part 30 (the upper surface of the placement member 36 or the upper surface of the food 40 placed on the placement member 36). Therefore, after the food 40 located on the conveyor belt 44 is sucked to the suction head 23, the suction head 23 is raised to a given height, the suction head 23 is moved to the gripping part 30 while the height is kept, and the suction is the stopped. Thus, the food 40 is supplied to the gripping part 30.

According to the above structure, since it is not necessary to replace the gripping part 30, it is not necessary to have the attaching part 19a, the holder 43, and the workbench 42, and the packing device 10 of the food 40 are reduced in the size and simplified.

Note that, in Embodiment 2, the gripping part 30 may not have the adjustment member 38 as in Embodiment 1. Moreover, in Embodiment 2, the suction openings 31 may not be formed in the support member 37 as in Embodiment 1. Further, in Embodiment 2, the gripping part 30 may not have the placement member 36 as in Embodiment 1. In this case, the workbench 42 may be used when the food 40 is supplied to the gripping part 30.

### (Embodiment 3)

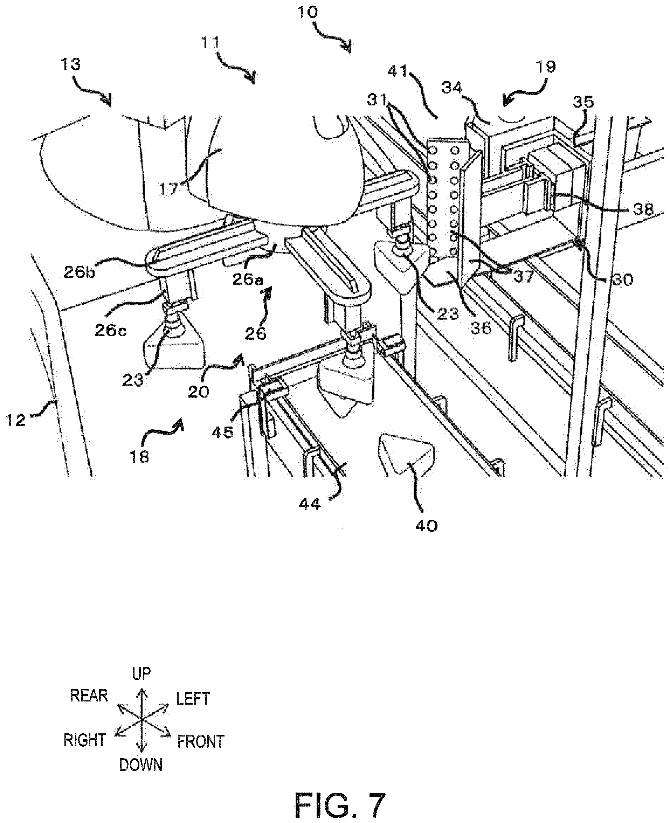

In the packing device 10 of the food 40 according to Embodiment 2, the feeding part 20 has one suction head 23. However, the number of suction heads 23 is not limited to this number, but may be two or more. As illustrated in Fig. 7, the feeding part 20 of the packing device 10 of the food 40 according to Embodiment 3 is provided with a plurality of suction heads 23 and a rotary body 26.

The rotary body 26 is connected to the plurality of suction heads 23, and rotates centering on an axis parallel to the direction in which the plurality of foods 40 are placed in order. For example, the rotary body 26 has a shaft part 26a and four straight line parts 26b. The shaft part 26a is connected to the wrist part 17 and extends vertically. The shaft part 26a has, for example, a cylindrical shape, and is rotatable in the circumferential directions.

The four straight line parts 26b extend in directions perpendicular to the shaft part 26a, while spacing equally in radial directions centering on the shaft part 26a. The suction heads 23 are provided to tip ends of the straight line parts 26b through telescopic members 26c, respectively. The suction heads 23 extend downwardly in a direction parallel to the shaft part 26a. Each suction head 23 is connected to the vacuum generating device 25 (Fig. 1) via the first piping 24 (Fig. 1). The telescopic members 26c extends in a direction parallel to the shaft part 26a, and expand and contract its length.

In this case, when supplying the food 40 from the conveyor belt 44 to the gripping part 30, the telescopic member 26c above the conveyor belt 44 extends to descend the suction head 23, the suction head 23 sucks the food 40 on the conveyor belt 44, and the telescopic member 26c then contracts to ascend the suction head 23. Then, the rotary body 26 rotates centering on the shaft part 26a, and another suction head 23 moves above the conveyor belt 44. For this suction head 23, the series of works comprised of the extension of the telescopic member 26c, the suction by the suction head 23, the contraction of the telescopic member 26c, and the rotation of the rotary body 26 is performed. Then, when the foods 40 are sucked to all the suction heads 23, the suction head 23 moves to the gripping part 30.

The suction of the suction head 23 is stopped to place the food 40 on the placement member 36 of the gripping part 30. Then, the rotary body 26 rotates centering on the shaft part 26a, and the suction of another suction head 23 is stopped. The series of works of the stopping of suction and the rotation of the rotary body 26 is repeated to supply all the foods 40 to the gripping part 30.

Here, each time the food 40 is placed on the placement member 36, the gripping part 30 may descend by the distance corresponding to the number of the foods 40 placed. Thus, the height of the food 40 sucked to the suction head 23 coincides with the height of the place where the food 40 is placed in the gripping part 30 (the upper surface of the placement member 36 or the upper surface of the foods 40 placed on the placement member 36).

According to the above structure, the feeding part 20 further has the rotary body 26 to which the plurality of suction heads 23 are connected and rotates centering on the axis parallel to the direction in which the plurality of foods 40 are placed in order. Thus, for example, the four-time reciprocating movements between the conveyor belt 44 and the gripping part 30 are reduced to one and, thus, the work efficiency is improved.

Note that the packing device 10 of the food 40 according to Embodiment 1 may further include the plurality of suction heads 23 and the rotary body 26. Thus, the work efficiency is further improved.

Moreover, in Embodiment 3, the gripping part 30 may not have the adjustment member 38 as in Embodiment 1. Moreover, in Embodiment 3, the suction openings 31 may not be provided to the support members 37 as in Embodiment 1. Further, in Embodiment 3, the gripping part 30 may not have the placement member 36 as in Embodiment 1. In this case, when supplying the food 40 to the gripping part 30, the workbench 42 may be used.

### (Other Embodiments)

In the above embodiments, although the suction head 23 is used for the feeding part 20, the present disclosure is not limited to this structure if the feeding part 20 is capable of supplying the food 40 to the workbench 42 etc. For example, the feeding part 20 may be an L-shaped plate member. In this case, the L-shaped plate member may scoop up the food 40 and supply it to the gripping part 30.

From the above description, it is apparent for a person skilled in the art that many improvements and other embodiments of the present disclosure are possible. Therefore, the above description is to be interpreted only as illustration, but is provided in order to teach a person skilled in the art the best modes that implement the present disclosure. Details of the structures and/or functions of the present disclosure may substantially be changed without departing from the spirit of the present disclosure.

### [Industrial Availability]

The present disclosure is useful for the food packing device etc. which can control the reduction in the work efficiency.

### DESCRIPTION OF REFERENCE CHARACTERS

- 10:: Packing Device
- 11:: Robot
- 13:: Arm
- 19a:: Attaching Part
- 20:: Feeding Part
- 23:: Suction Head
- 26:: Rotary Body
- 30:: Gripping Part
- 31:: Suction Opening
- 32:: Second Piping
- 36:: Placement Member
- 37:: Support Member
- 40:: Food

## Claims

1. A food packing device, comprising:
a feeding part configured to supply food;
a gripping part configured to grip a plurality of foods at both sides of a plurality of foods in a direction in which the plurality of foods are placed in order by the feeding part; and
a conveying part configured to convey onto a tray the plurality of foods gripped by the gripping part.

2. The food packing device of claim 1, wherein the gripping part has a pair of support members, and an adjustment member configured to adjust a mutual spacing of the pair of support members, and
wherein the pair of support members grip the plurality of foods by reducing the mutual spacing.

3. The food packing device of claim 1 or 2, wherein the gripping part has support members and suction openings formed in contact surfaces configured to contact the food in the support members, and
wherein the support members grip the plurality of foods by sucking the foods to the contact surfaces through the suction openings.

4. The food packing device of any one of claims 1 to 3, further comprising an attaching part to which a plurality of gripping parts are replaceably attached.

5. The food packing device of any one of claims 1 to 4, wherein the gripping part further has a placement member extending in a direction perpendicular to the direction in which the plurality of foods are placed in order, the foods placed on the placement member.

6. The food packing device of any one of claims 1 to 5, wherein the feeding part has one or more suction heads configured to suck the food.

7. The food packing device of claim 6, wherein the feeding part further has a rotary body, connected to a plurality of suction heads, and configured to rotate centering on an axis parallel to the direction in which the plurality of foods are placed in order.

8. The food packing device of any one of claims 1 to 7, wherein an outer surface of the food has a pair of parallel surfaces, and the gripping part grips the plurality of foods placed in order in a state where the parallel surfaces contact each other.

9. The food packing device of any one of claims 1 to 8, comprised of a robot including:
a first arm having the feeding part at a tip end thereof; and
a second arm having the gripping part at a tip end thereof.
